# EUROPÄISCHE PATENTSCHRIFT

(11) **EP 1 290 530 B1**
(45) Veröffentlichungstag und Bekanntmachung des Hinweises auf die Patenterteilung: **04.01.2006**
(21) Anmeldenummer: 01940447.4
(22) Anmeldetag: 10.05.2001
(51) Int. Cl.: G06F 1/00

(54) **VERSCHLÜSSELN VON ABZUSPEICHERNDEN DATEN IN EINEM IV-SYSTEM**
ENCRYPTION OF DATA TO BE STORED IN AN INFORMATION PROCESSING SYSTEM
CHIFFREMENT DE DONNEES A MEMORISER D'UN SYSTEME IV

(30) Priorität: 24.05.2000 DE 10025626
(43) Veröffentlichungstag der Anmeldung: 12.03.2003
(73) Patentinhaber: Deutsche Telekom AG, 53113 Bonn (DE)
(72) Erfinder: KUNITZ, Hardy, 53501 Grafschaft (DE); METTKEN, Werner, 59969 Hallenberg (DE)
(86) Internationale Anmeldenummer: PCT/EP2001/005342
(87) Internationale Veröffentlichungsnummer: WO 2001/090855

(56) Entgegenhaltungen:
- EP-A- 0 647 895
- EP-A- 0 709 760
- EP-A- 0 774 715
- US-A- 5 802 175
- US-A- 5 818 936

## Beschreibung

Die Erfindung betrifft ein Verfahren zum Zuweisen zumindest eines Verschlüsselungsparameters nach dem Oberbegriff des Anspruchs 1 und ein Informationsverarbeitungs- (IV-) System zur Durchführung dieses Verfahrens.

Die Datensicherheit ist im heutigen Informationszeitalter von elementarer Bedeutung. Dies betrifft sowohl die Wiederherstellbarkeit von Daten, die auf Speichermedien abgelegt sind, als auch die Beschränkung der Kenntnis der in den Daten angegebenen Informationen auf einen vorbestimmten Personenkreis. Um zu verhindern, dass derartige, vorbestimmte Daten von nicht autorisierten Personen gelesen werden können, werden diese verschlüsselt gespeichert. Hierzu werden im Allgemeinen bekannte und standardisierte kryptographische Verfahren verwendet, bei welchen die Daten durch vorgegebene Funktionen umgewandelt werden, wobei die Funktionen von einem sogenannten Schlüssel parametriert werden. Bei symmetrischen Verschlüsselungsverfahren wird der Schlüssel zum Verschlüsseln der Daten auch zum Entschlüsseln des Chiffredaten verwendet. Beispielhafte symmetrische kryptographische Algorithmen sind der DES (Data Encryption Standard) und IDEA (International Data Encryption Algorithm). Im Gegensatz dazu wird bei asymmetrischen Verschlüsselungsverfahren zum Entschlüsseln der Chiffre-Daten ein als "privat key" bezeichneter Schlüssel verwendet, der sich von dem als "public key" bezeichneten Schlüssel zum Verschlüsseln der Daten unterscheidet, wobei der letztgenannte Schlüssel der Öffentlichkeit bekannt gemacht wird. Aus einem der Schlüssel für das asymmetrische Verschlüsselungsverfahren ist der jeweils andere mit vertretbarem Aufwand nicht wiederherstellbar. Da die Verschlüsselung mit symmetrischen Verfahren etwa 100 bis 1000 Mal schneller als mit asymmetrischen Verfahren durchgeführt werden kann, werden häufig für die Verschlüsselung von größeren Datenmengen, beispielsweise von Dateien i.d.R. symmetrische Verschlüsselungsverfahren eingesetzt.

Auf dem Gebiet bekannt sind auch Protokolle, bei welchen zwischen Kommunikationspartner zur Online-Verschlüsselung ein sogenannter Sitzungsschlüssel (session key) festgelegt wird, der für die Kommunikation zur Verschlüsselung der auszutauschenden Informationen verwendet wird, wobei der Schlüssel nach der Beendigung der Kommunikation seine Gültigkeit verliert. Dabei kann der i.d.R. symmetrische Schlüssel von einem sogenannten Schlüsselverteilungszentrum erzeugt und an beide Kommunikationspartner übermittelt werden, was im US-Standard FED-STD-1037C zur Definition des Begriffs des Schlüsselverteilungszentrums (Key distribution center (KDC)) festgelegt ist.

Eine Übersicht zur Kryptologie ist beispielsweise in dem Buch "Computer Netzwerke", von Andrew S. Tannenbaum, 3. Auflage, Prentice Hall, 1999, Seiten 613 ff angegeben.

Unternehmen mit einer Vielzahl von Mitarbeitern, die an das firmeneigene Computernetz angeschlossen sind, müssen dafür Sorge tragen, dass die vorbestimmten Daten im System verschlüsselt abgelegt sind, jedoch auch sicherstellen, dass diese Daten jederzeit wieder hergestellt, d.h. zugänglich gemacht werden können. Demnach ist es nicht ausreichend, wenn eine mit derartigen Daten befasste Person diese verschlüsselt im System abspeichert, da insbesondere bei einem Personalwechsel oder gar dem Verlust des Schlüssels die Wiederherstellung dieser Daten nicht gewährleistet werden kann. Bestimmte Verschlüsselungsverfahren bieten zu diesem Zweck einem Supervisor die Möglichkeit, die verschlüsselten Daten trotz des nicht bekannten Schlüssels wiederherzustellen. In einem weiteren Ansatz wird der private Schlüssel des jeweiligen Benutzers firmenintern kopiert, um bei Bedarf dessen Daten wiederherstellen zu können.

Beide Ansätze bieten i.d.R. für das Unternehmen grundsätzlich die Möglichkeit, sowohl seine abgespeicherten, verschlüsselten Daten wiederherzustellen als auch die verschlüsselte Kommunikation des Benutzers im firmeneigenen IV-System zu verfolgen, da im Allgemeinen in beiden Fällen der öffentliche Schlüssel des Benutzers zur Verschlüsselung verwandt wird, wobei die Chiffre-Daten mit dem privaten Schlüssel des Benutzers wiederhergestellt werden. Im Hinblick auf den Datenschutz und das Persönlichkeitsrecht des jeweiligen Benutzers sind beide Ansätze jedoch zumindest bedenklich. Andererseits kann es für ein Unternehmen beispielsweise von größter Wichtigkeit sein, im IV-System des Unternehmens gespeicherte Informationen wiederherzustellen und zugänglich zu machen. Dies ist unter Umständen nur mit erheblichem organisatorischem Aufwand oder einer erhöhten Kompliziertheit der Nutzung möglich. Bei Versagen oder Nichteinhaltung der Bestimmungen ist es in der Regel unmöglich, die gespeicherte Informationen wiederherzustellen, was schlimmstenfalls den Bestand des Unternehmens gefährden kann.

Die EP 0647895 A1 beschreibt ein Verfahren zur Verhinderung versehentlicher Entschlüsselung geheimer Daten durch einen Datenverwalter. Dabei werden von einem Benutzer Daten aufgezeichnet, die verschlüsselte Passwort-Daten, sowie Informationen enthalten, welche den Benutzer eindeutig identifizieren. Diese kombinierten Daten werden dann unter Verwendung des öffentlichen Schlüssels des Datenverwalters verschlüsselt und im Rechner des Benutzers abgelegt. Vergißt der Benutzer sein Passwort, so kann der Datenverwalter die Information mit seinem privaten Schlüssel wieder entschlüsseln und die Informationen, welche den Benutzer eindeutig identifizieren, mit der Identität des Benutzers vergleichen und dem berechtigten Benutzer das verlorene Passwort wieder mitteilen. Dieses Verfahren ist jedoch auf die Mitwirkung des berechtigten Benutzers angewiesen.

Der Erfindung liegt somit das Problem zugrunde, bei der Verschlüsselung von abzuspeichernden Daten sowohl den Datenschutz und das Persönlichkeitsrecht des Benutzers zu berücksichtigen als auch den Bedürfnissen des Unternehmens nach Wiederherstellbarkeit der verschlüsselten Daten Rechnung zu tragen.

Diese Problematik wird schon mit einem Verfahren zum Zuweisen zumindest eines Verschlüsselungsparameters wenigstens einem Benutzer für die Verschlüsselung von abzuspeichernden Daten in einem IV-System nach Anspruch 1 bzw. einem IV-System zur Durchführung eines derartigen Verfahrens nach Anspruch 10 gelöst. Danach fordert eine Datenverarbeitungseinrichtung bei Bedarf zumindest einen Verschlüsselungsparameter an, worauf zumindest ein Verschlüsselungsparameter für ein symmetrisches Verschlüsselungsverfahren unter Ansprechen auf die Anforderung ermittelt und danach übermittelt wird. Dadurch, dass eine Zuordnungsinformation erzeugt wird, die den zu verschlüsselnden und zu speichernden Daten und/oder dem Benutzer den zumindest einen Verschlüsselungsparameter zuordnet und diese Zuordnungsinformation derart abgespeichert wird, dass sie einem berechtigten Dritten zugänglich ist, ist von dem Dritten der für die jeweiligen Daten benutzte Verschlüsselungsparameter für eine spätere Entschlüsselung der Daten bei Bedarf bestimmbar, wodurch die Daten für das Unternehmen wiederhergestellt werden können.

Erfindungsgemäß kann dabei das Erzeugen und Abspeichern der Zuordnungsinformation entweder schon vor der Abgabe der entsprechenden Anforderungen durchgeführt sein, oder erst nach der Abgabe der Anforderung durchgeführt werden; in diesem Sinne ist die Reihenfolge der in Anspruch 1 aufgeführten verfahrensschritte nicht in jedem Fall chronologisch.

Vorteilhafte Weiterbildungen sind Gegenstand der Unteransprüche.

Die Zuordnungsinformation kann auf vielfältige Weise, insbesondere in Form einer Tabelle im IV-System abgelegt sein. Beispielsweise kann das Speicherdatum der abzuspeichernden Daten, der Dateiname, die Angabe der Speicherstelle, der Benutzer selbst, die Zugehörigkeit des Benutzers zu einer vorgegebenen Benutzergruppe oder einem Unternehmensbereich, der Datenverarbeitungseinrichtung, von welcher der Benutzer seine Anforderung abschickt, usw. als jeweiliges Kennzeichen einem bestimmten Schlüssel zugeordnet sein. Demzufolge wird beim Erzeugen der Zuordnungsinformation zumindest ein Kennzeichen der zu speichernden Daten und/oder des Benutzers mit dem wenigstens einen Verschlüsselungsparameters verknüpft. Mit Kenntnis dieser Zuordnungsinformation ist für den berechtigten Dritten der entsprechende Verschlüsselungsparameter feststellbar, mit welchem die abzuspeichernden Daten verschlüsselt wurden. Der Verschlüsselungsparameter kann im einfachsten Fall ein Schlüssel für ein vorbestimmtes symmetrisches Verschlüsselungsverfahren sein. Dieser Schlüssel ist erfindungsgemäß demnach nicht nur der Stelle bekannt, welche den Schlüssel zum Verschlüsseln der Daten angefordert und verwendet hat, sondern auch an anderer Stelle im IV-System hinterlegt und kann somit für eine spätere Wiederherstellung der verschlüsselten und insbesondere auf einem nichtflüchtigem Speichermedium abgespeicherten Daten benutzt werden.
Andererseits wird die Kommunikation des Benutzer innerhalb des IV-Systems durch die Übertragung des symmetrischen Verschlüsselungsparameters im Hinblick auf den Datenschutz und sein Persönlichkeitsrecht nicht beeinträchtigt, da der im IV-System für das Verschlüsseln der jeweiligen abzuspeichernden Daten verwendete Verschlüsselungsparameter keinen Bezug zur Kommunikation des Benutzer innerhalb des IV-Systems besitzt. Erfindungsgemäß kann der Benutzer entweder eine Person oder auch ein auf der Datenverarbeitungseinrichtung ablaufender Prozess sein.

Das Verfahren kann auf beliebige IV-Systeme, insbesondere Rechnernetze unabhängig von deren Größe, Übertragungstechnik und Topologie angewendet werden.

Wie erwähnt, liegt es im Rahmen der Erfindung, die beschriebene Zuordnungsinformation entweder für Anforderungen nach Verschlüsselungsparametern im IV-System bereitzuhalten oder diese Zuordnungsinformation erst nach der Ermittlung des Verschlüsselungsparameters unter Ansprechen auf die Anforderung zu speichern. Im ersten Fall kann beispielsweise festgelegt sein, das ein bestimmter Benutzer immer oder über einen vorgegebenen Zeitraum den gleichen Schlüssel zugewiesen bekommt. Im zweiten Fall kann beispielsweise unter Ansprechen auf eine Anforderung ein Schlüssel mittels eines zufallsverfahrens erzeugt werden und danach der Schlüssel zusammen mit einem Zeiger, der auf die verschlüsselten Daten weist oder mit einem der beschriebenen Kennzeichen abgespeichert werden.

Immer wenn beispielsweise in einem IV-System Daten verschlüsselt und abgespeichert werden sollen, kann der dem Benutzer zugeordnete Rechner entweder automatisch oder auf Anweisung des Benutzers eine Anforderung an einen vorbestimmten Server innerhalb des IV-Systems absetzen und erhält von diesem zur Verschlüsselung der abzuspeichernden Daten einen Verschlüsselungsparameter zugewiesen, mit welchem die zu speichernden Daten vor der Speicherung auf einem nichtflüchtigen Medium für nicht autorisierte Personen unzugänglich gemacht werden.

Zur Absicherung der Kommunikation zwischen dem Benutzer und dem Server können die auszutauschenden Informationen mit einem asymmetrischen Verschlüsselungsverfahren abgesichert werden. Hierbei verwendet der Server einen öffentlichen Schlüssel des Benutzers und der Benutzer nutzt zur Wiederherstellung der gesendeten Information seinen eigenen, dem öffentlichen Schlüssel zugeordneten privaten Schlüssel. Auf diese Weise ist es beispielsweise möglich, die gesamte Kommunikation asymmetrisch verschlüsselt ablaufen zu lassen oder mittels eines asymmetrischen Verschlüsselungsverfahrens einen Kommunikationsschlüssel für ein symmetrisches Verschlüsselungsverfahren zum Absichern der Kommunikation zwischen dem Benutzer und dem Server auszutauschen. Dabei wird der übertragene, zumindest eine Verschlüsselungsparameter für das symmetrische Verschlüsselungsverfahren zum Sichern der zu speichernden Daten in einer Kommunikationssitzung übertragen, die selbst mit einem symmetrischen Verschlüsselungsverfahren abgesichert ist. Es ist weiterhin möglich, mit Hilfe des asymmetrischen Verschlüsselungsverfahrens gleichzeitig eine Authentifikation des Benutzer durchzuführen, indem dieser seine Anforderung an den Server zumindest teilweise mit seinem privaten Schlüssel verschlüsselt, wobei der Server durch das Entschlüsseln des verschlüsselten Teils mit dem bekannten öffentlichen Schlüssel des Benutzers erkennen kann, das die Anforderung tatsächlich von dem bestimmten Benutzer gesendet wurde.

Um eine Differenzierbarkeit der Anforderung nach einem Verschlüsselungsparameter bereitzustellen, kann vorgesehen sein, dass die Anforderung im Ansprechen auf im IV-System abgelegte Information, welche die Daten und/oder den Benutzer betreffen, bearbeitet wird, wobei beispielsweise in einer Datenbank abgelegte diesbezügliche Informationen geladen werden können. Diese Informationen, insbesondere spezifische Kennzeichen der abzuspeichernden Daten selbst oder des Benutzer können bei der Ermittlung des Verschlüsselungsparameters mit denen der Zuordnungsinformation verglichen werden. Liegt ein bestimmtes Kennzeichen vor, so ergibt sich in eindeutiger Weise aus der Zuordnungsinformation der gesuchte Verschlüsselungsparameter. Es ist natürlich auch möglich, dass die im System abgelegte, einen Benutzer betreffende Information diesem direkt einen Verschlüsselungsparameter zuweist, d.h. die Information über den Benutzer auch die Zuordnungsinformation umfassen kann. Erfindungsgemäß haben auf diese Informationen nur berechtigte Dritte Zugriff.

Zur Bereitstellung von Informationen über den jeweiligen Benutzer kann beispielsweise ein im IV-System abgelegtes Zertifikat betreffend den Benutzer geladen werden, wobei das Zertifikat neben einem öffentlichen Schlüssel des Benutzers für ein asymmetrisches Verschlüsselungsverfahren weitere, den Benutzer betreffende Information, beispielsweise betreffend die Zugehörigkeit zu Projekten, Personen, Arbeitsgruppen und/oder eine Geheimhaltungseinstufung umfasst. Erfindungsgemäß kann beispielsweise in Abhängigkeit dieser Informationen der zu sendende, zumindest eine Verschlüsselungsparameter konfektioniert werden. Der im Zertifikat gespeicherte öffentliche Schlüssel kann wie oben erwähnt einerseits zum Authentifizieren des Benutzers und andererseits zum Verschlüsseln des an den Benutzer zu übermittelnden, diesem zugewiesenen symmetrischen Verschlüsselungsparameter verwendet werden.

Um unabhängig von subjektiven Einschätzungen bezüglich der Geheimhaltungsbedürftigkeit von Daten zu sein, kann das System automatisch und in vordefinierter Weise, insbesondere ohne Zutun des Benutzer entscheiden, ob die Daten verschlüsselt abgelegt werden sollen und demnach ein entsprechender Verschlüsselungsparameter zugewiesen werden muss. Je nach Ausführungsform kann dabei eine Differenzierung in Bezug auf die jeweiligen Daten, die Datenverarbeitungseinrichtung, welche die Anforderungen absetzt oder den Benutzer durchgeführt werden. Sind in vorbestimmter Weise die Daten selbst oder die Arbeiten des Benutzers als geheimhaltungsbedürftig eingestuft, so wird durch das erfindungsgemäße Verfahren zumindest ein Verschlüsselungsparameter, insbesondere ein Schlüssel zugewiesen.

Das erfindungsgemäße Verfahren ist besonders effizient in einem IV-System einsetzbar, wenn die Bearbeitung der jeweiligen Anforderung, das Ermitteln des zumindest einen Verschlüsselungsparameters, das Erzeugen und/oder das Speichern der Zuordnungsinformation, welche den jeweiligen abzuspeichernden Daten und/oder dem Benutzer den zumindest einen Verschlüsselungsparameter zuordnet, zentral im IV-System in jeweiligen Einrichtungen durchgeführt werden. Immer wenn an irgendeiner Stelle im IV-System Daten abzuspeichern sind, wird vom jeweiligen Client eine Anforderung an die vorbestimmte zentrale Stelle zur Zuweisung zumindest eines Verschlüsselungsparameters abgesetzt. Zentral für das IV-System wird dann entschieden, ob die betreffenden Daten verschlüsselt abgespeichert werden sollen, um dann bei Bedarf zumindest einen Verschlüsselungsparameter, insbesondere einen Schlüssel zu ermitteln und zu übermitteln.

Der Ablauf bei der Ermittlung des Schlüssels, mit welchem Informationen in einer vorgegebenen, auf einem nichtflüchtigen Speichermedium gespeicherten Datei verschlüsselt wurde, ist sehr ähnlich dem beim Zuweisen des Schlüssels. Im Falle des Verlusts eines privaten Schlüssels kann der berechtigte Dritte eine Anforderung zum Festellen des Schlüssels an einen Schlüssel-Server (Key-server) absenden, wobei zur Identifizierung der vorgegebenen Datei zumindest ein Kennzeichen der Datei und/oder des Benutzer, welcher die Datei verschlüsselt abgespeichert hat, an den Key-Server übertragen wird. Im Ansprechen auf die Anforderung wird der gesuchte Schlüssel dadurch festgestellt, dass im IV-System abgelegte Zuordnungsinformation abgefragt wird, in welcher dem zumindest einen Kennzeichen der Datei und/oder des Benutzers der Schlüssel eindeutig zugeordnet ist. Diese Zuordnungsinformation kann die Zuordnungsinformation sein, welche zum Zuweisen des Schlüssels gedient hat. Danach kann der festgestellte Schlüssel an den Dritten übermittelt werden. Mit Kenntnis des Schlüssels kann dieser die in der gespeicherten Datei abgelegten Informationen durch Entschlüsseln wiederherstellen.

Die obengenannte Aufgabe wird ferner durch die Merkmale des Anspruchs 10 gelöst.

Eine vorteilhafte Weiterbildung ist Gegenstand des Unteranspruchs 11.

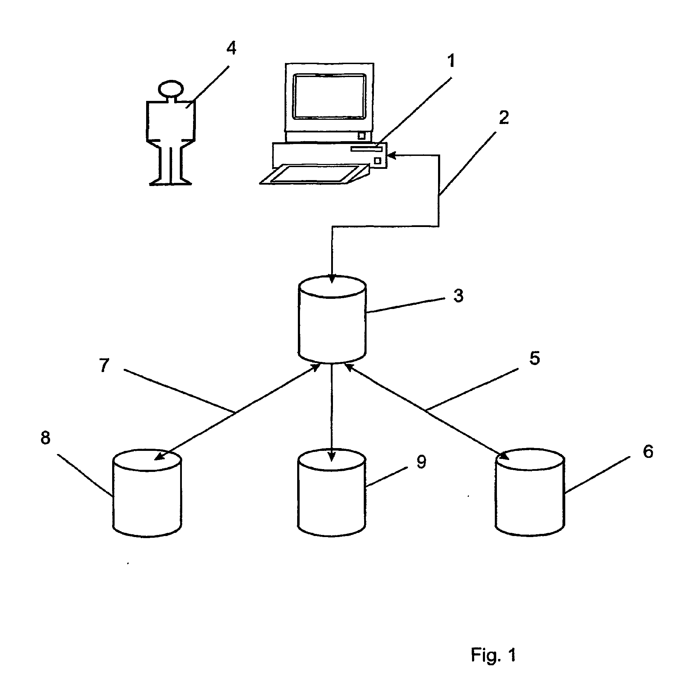

Die Erfindung wird im Folgenden durch das Beschreiben einiger Ausführungsformen unter Bezugnahme auf die Zeichnung erläutert, wobei
- Fig. 1: in einer Prinzipskizze im Ausschnitt ein IV-System zur Durchführung des erfindungsgemäßen Verfahrens zeigt.

Fig. 1 zeigt im Ausschnitt ein beispielhaftes IV-System, in welchem die Erfindung realisiert ist. Eine Vielzahl von Personal Computern und Workstations sind an ein LAN (Local Area Network) angeschlossen, wobei diese über das Netz an einen Schlüssel-Server 3 angeschlossen sind, der mit verschiedenen Datenbank-Servern 8, 9, 6 verbunden ist. Zur einfacheren Darstellung ist in Fig. 1 von den Personal Computern und Workstations nur ein durch einen Benutzer 4 bedienbarer Arbeitsplatzrechner 1 dargestellt. Benutzer-Daten können entweder lokal oder auf speziellen Dateiservern im Netz abgespeichert werden.

Jeder Benutzer authentifiziert sich mit einer Chipkarte und einer zugeordneten PIN (Personal Identification Number), wobei die Chipkarte an jedem der angeschlossenen Personal Computer bzw. Workstations gelesen werden kann. Auf der Chipkarte ist ein privater Schlüssel für das asymmetrisches Verschlüsselungsverfahren RSA abgelegt, mit welchem der jeweilige Benutzer an ihn gesandte, verschlüsselte Nachrichten entschlüsselt. Im vorliegenden Fall wird das asymmetrische Verschlüsselungsverfahren verwendet, um einen Sitzungsschlüssel zum Verschlüsseln der Kommunikationsdaten zwischen den Kommunikationspartnern im IV-System auszutauschen. Dieser Sitzungsschlüssel ist ein von beiden Seiten verwendeter Schlüssel für das vorbestimmte, symmetrische Verschlüsselungsverfahren. Der private Schlüssel des Benutzers 4 ist nur auf dessen Chipkarte vermerkt und kann beispielsweise nach einem Verlust der Karte nicht wiederhergestellt werden.

Im Folgenden wird das erfindungsgemäße Verfahren erläutert. Der Benutzer 4 sei im dargestellten IV-System seines Unternehmens eingeloggt und starte einen Speichervorgang für Daten, die von ihm bearbeitet wurden. Mit dem Speicherbefehl wird je nach Ausführungsform der Erfindung entweder automatisch oder auf Initiative des Benutzers eine Anforderung vom Arbeitsplatzrechner 1 an den Schlüssel-Server 3 abgesetzt. In diesem Sinne arbeitet der Arbeitsplatzrechner des Benutzers als Client 1, über den der Benutzer 4 an den Schlüssel-Server 3 eine Anforderung sendet. Siehe Fig. 1, in der diese Client-Server-Beziehung durch den Doppelpfeil 2 dargestellt ist. Unter Ansprechen auf die Anforderung reagiert der Schlüssel-Server 3 mit der Übermittlung eines von ihm ermittelten Schlüssels für das vorbestimmte, symmetrische Verschlüsselungsverfahren Tripel-DES. Der Client 1 benutzt den vom Schlüssel-Server 3 erhaltenen Schlüssel zum Verschlüsseln der zu speichernden Daten und speichert die Chiffredaten auf seiner lokalen Festplatte ab. Um später Zugriff auf die abgespeicherten Daten zu haben, wird zusammen mit den verschlüsselten abzuspeichernden Daten der für die Verschlüsselung verwendete symmetrische Schlüssel auch abgespeichert. Um zu verhindern, dass ein Dritter unberechtigter Weise die abzuspeichernden Daten mit dem auch abgespeicherten Schlüssel sichtbar macht, wird der symmetrische Schlüssel mit dem öffentlichen Schlüssel des Benutzers 4 asymmetrisch verschlüsselt. Demnach besteht die abgespeicherte Datei aus zwei Teilen, den symmetrisch verschlüsselten, zu speichernden Daten und dem asymmetrisch verschlüsselten symmetrischen Schlüssel zum Entschlüsseln der Daten. In Fällen, in denen einem einzelnen Benutzer für die Verschlüsselung von zu speichernden Daten immer der gleiche Schlüssel zugewiesen wird, ist nur die einmalige Speicherung des mit dem asymmetrischen Schlüssel des Benutzers verschlüsselten symmetrischen Schlüssels auf dem lokalen Rechner des Benutzers notwendig.

In einer anderen Ausführungsform der Erfindung werden alle Daten des Systems zentral auf Dateiservern gehalten Dabei ist es auch möglich, dass der Dateiserver selbst die Anforderung als Client an den Key-Server 3 abgibt und die Daten vor der Speicherung vom Dateiserver mit dem übermittelten Schlüssel verschlüsselt werden.

In beiden Fällen ist der Benutzer in der Lage, mit Hilfe seines privaten Schlüssels für das asymmetrische Verschlüsselungsverfahren den Schlüssel, mit welchem die zu speichernden Daten verschlüsselt wurden, wieder zu entschlüsseln und damit letztlich die Daten wieder zu lesen.

Nachdem der Schlüssel-Server 3 vom Arbeitsplatzrechner 1 des Benutzers 4 die Anforderung erhalten hat, kann dieser die Anforderung je nach spezifischer Einstellung des Systems bearbeiten. Die Bearbeitung der Anforderung kann dabei in Abhängigkeit vom im System abgelegten Informationen über die abzuspeichernden Daten und/oder den Benutzer des Clients erfolgen. Im beschriebenen Beispiel setzt der Schlüssel-Server 3 eine Anforderung den Datenbank-Server 8 ab, der im vorliegenden Fall ein X.500-Server 8 ist. Der X.500-Server stellt Zertifikate für alle Benutzer des IV-Systems bereit. In einem derartigen Zertifikat für einen bestimmten Benutzer können der öffentliche Schlüssel für das obenstehend erwähnte asymmetrische Verschlüsselungsverfahren und spezifische Informationen über die Geheimhaltungseinordnung, die Gruppenzugehörigkeit und die Funktionsbezeichnung des Benutzers abgelegt sein. Die genannten Kennzeichen des Benutzers werden vom X.500-Server 8 an den Schlüssel-Server 3 übermittelt. Die beschriebene Kommunikation zwischen den beiden Geräten 3, 8 ist in Fig. 1 mit dem Doppelpfeil 7 gekennzeichnet. Nach der Kommunikation mit dem X.500-Server setzt der Schlüssel-Server 3 eine Anforderung an den Datenbank-Server 6 ab, der einen Policy-Server darstellt. Auf dem Policy-Server 6 sind die Zuordnungsinformationen in Form von Regeln für das Ermitteln des symmetrischen Schlüssels abgelegt. Im vorliegenden Fall ist der Benutzer 4 aufgrund seines Zertifikats einer bestimmten Personengruppe zugeordnet, womit ihm aufgrund der vom Policy-Server 6 geladenen Regeln ein vorbestimmter Schlüssel für das symmetrische Verschlüsselungsverfahren zugewiesen wird. Um das Abhören des zum Arbeitsplatzrechner 4 zu übertragenden symmetrischen Schlüssels zu verhindern, verschlüsselt der Key-Server 3 den symmetrischen Schlüssel nach dem vorbestimmten asymmetrischen Verfahren RSA mit dem vom X.500-Server 8 erhaltenen öffentlichen Schlüssel. Im Arbeitsplatzrechner 1, d.h. dem Client, wird mit Hilfe des privaten Schlüssels des Benutzers 4 der symmetrische Schlüssel wiederhergestellt und zum Verschlüsseln der zu speichernden Daten verwendet.

Die Hardware um den Key-Server 3 mit den Servern 8,9,6 einschließlich der dort abgelegten Daten unterliegt der höchsten Geheimhaltungsstufe des Unternehmens. Durch geeignete Maßnahmen ist sichergestellt, dass nur berechtigte Dritte Zugang zu den dort gespeicherten Daten haben.

Um bei Bedarf die auf dem lokalen Arbeitsplatzrechner 1 abgespeicherten verschlüsselten Daten ohne Kenntnis des privaten Schlüssels des Benutzers 4 wiederherstellen zu können, wird der zum Client 1 gesendete symmetrische Schlüssel zusätzlich auf dem Datenbank-Server 9, der ein spezieller Backup-Key-Server ist, zusammen mit einem Zeiger auf die auf dem lokalen Rechner 1 abgelegten Datei gespeichert. Geht der private Schlüssel des Benutzers 4 verloren, und besteht Bedarf, auf die in der Datei abgelegten Daten Zugriff zu haben, kann der berechtigte Dritte mittels des Dateinamens auf dem Server 9 den zugeordneten symmetrischen Schlüssel feststellen, welcher für die Entschlüsselung der auf dem Arbeitsplatzrechner 1 abgelegten Information benutzt werden kann.

In einer anderen Ausführungsformen der Erfindung kann der Backup-Key-Server 9 entfallen. Ist durch die Dateiverwaltung des IV-Systems eine abgespeicherte Datei mit verschlüsselten Daten einem bestimmten Benutzer eindeutig zuzuordnen, kann aufgrund der Informationen auf dem X.500-Server 8 über diesen Benutzer und aufgrund der Informationen auf dem Policy-Server 6 über die Zuordnungsregeln ermittelt werden, welcher symmetrische Schlüssel zur Verschlüsselung der Daten verwendet wurde, wenn der Schlüssel nur aufgrund von Kennzeichen des Benutzers zugewiesen wurde.

Eine automatische Zuweisung eines Schlüssels beruht in einer anderen Ausführungsform auf dem Erkennen einer vorbestimmten Datei-Extension, welche die Art der vom Benutzer 4 bearbeiteten Daten als unternehmensrelevant kennzeichnet. Versucht der Benutzer 4, eine derartige Datei zu Speichern, wird automatisch ein Schlüssel durch den Arbeitsplatzrechner 1 angefordert und diesem vom Schlüssel-Server 3 für die Verschlüsselung der Daten zugewiesen.

## Patentansprüche

1. Verfahren zum Zuweisen zumindest eines Verschlüsselungsparameters wenigstens einem Benutzer (4) für die Verschlüsselung von abzuspeichernden Daten in einem Informationsverarbeitungs-(IV-)System mit den Schritten:
- Anfordern zumindest eines Verschlüsselungsparameters durch einen Client (1);
- unter Ansprechen auf die Anforderung wird zumindest ein Verschlüsselungsparameters für ein symmetrisches Verschlüsselungsverfahren in einer Einrichtung (3) des IV-Systems Zentral ermittelt;
- Übermitteln des zumindest einen ermittelten symmetrischen Verschlüsselungsparameters zum Client (1);
- in einer Einrichtung des IV-Systems wird eine Zuordnungsinformation Zentral erzeugt, die den zu speichernden Daten und/oder dem Benutzer (4) den zumindest einen symmetrischen Verschlüsselungsparameter zuordnet;
- Speichern der erzeugten Zuordnungsinformation Zentral im Informationsverarbeitungssystem, wobei die Zuordnungsinformation zumindest einem berechtigten Dritten zugänglich ist.

2. Verfahren nach Anspruch 1,
**dadurch gekennzeichnet, dass** die Zuordnungsinformation durch das Verknüpfen zumindest eines Kennzeichens der zu speichernden Daten und/oder wenigstens eines Kennzeichens des Benutzers mit dem zumindest einen Verschlüsselungsparameter erzeugt wird.

3. Verfahren nach Anspruch 1 oder 2,
**dadurch gekennzeichnet, dass**
der zumindest eine symmetrische Verschlüsselungsparameter vor der Übermittlung zum Client (1) mittels eines asymmetrischen Verschlüsselungsverfahrens verschlüsselt wird, und dass
der zumindest eine asymmetrisch verschlüsselte, symmetrische Verschlüsselungsparameter im Client (1) mittels eines dem Benutzer (4) zugeordneten privaten Schlüssels entschlüsselt wird.

4. Verfahren nach Anspruch 1, 2 oder 3,
**dadurch gekennzeichnet, dass** das Ermitteln des zumindest einen Verschlüsselungsparameters unter Ansprechen auf im IV-System abgelegte Informationen, insbesondere über wenigstens ein Kennzeichen der abzuspeichernden Daten und/oder wenigstens ein Kennzeichen des Benutzers (4) durchgeführt wird.

5. Verfahren nach Anspruch 1, 2 oder 3,
**dadurch gekennzeichnet, dass** der zumindest eine Verschlüsselungsparameter unabhängig von den abzuspeichernden Daten und/oder dem Benutzer (4) ermittelt und danach die Zuordnungsinformation gespeichert wird, durch die den abzuspeichernden Daten und/oder dem Benutzer der zumindest eine Verschlüsselungsparameter zugeordnet wird.

6. Verfahren nach einem der Ansprüche 1 bis 5,
**dadurch gekennzeichnet, dass**
vor dem Ermitteln des zumindest einen Verschlüsselungsparameters die Zugangsberechtigung des Benutzers (4) zum IV-System geprüft wird, und dass bei Vorliegen der Zugangsberechtigung ein dem Benutzer (4) zugeordnetes Zertifikat abgerufen wird, welches Benutzer-spezifische Informationen, insbesondere einen öffentlichen Schlüssel des Benutzer (4), enthalten kann.

7. Verfahren nach einem der Ansprüche 1 bis 6,
**dadurch gekennzeichnet, dass** die Bearbeitung der jeweiligen Anforderung, die Ermittlung des zumindest einen Verschlüsselungsparameters und/oder das Speichern der Zuordnungsinformation, welche den jeweiligen abzuspeichernden Daten und/oder dem Benutzer (4) den zumindest einen Verschlüsselungsparameter zuordnen, in einer jeweils separaten Einrichtung des IV-Systems durchgeführt wird.

8. Verfahren nach einem der Ansprüche 1 bis 7, **dadurch gekennzeichnet, dass** der wenigstens eine Verschlüsselungsparameter in Abhängigkeit von der Art der zu speichernden Daten automatisch von dem Client (1) angefordert wird.

9. Verfahren nach einem der Ansprüche 1 bis 7,
**dadurch gekennzeichnet, dass** der wenigstens eine Verschlüsselungsparameter vom Benutzer (4) an dem Client (1) angefordert wird.

10. Informationsverarbeitungssystem, insbesondere zur Durchführung eines Verfahrens nach einem der Ansprüche 1 bis 9, mit
- wenigstens einem Client (1) zur Abgabe einer Anforderung wenigstens eines symmetrischen Verschlüsselungsparameters,
- einer mit dem wenigstens einen Client (1) verbundenen Einrichtung (3) zum Zentralen Verarbeiten von Anforderungen wenigstens einer symmetrischen Verschlüsselungsparameters, wobei die Einrichtung (3) unter Ansprechen auf eine Anforderung des Client (1) den zumindest einen symmetrischen Verschlüsselungsparameter Zentral ermittelt und diesen zum Client (1) überträgt, eine Einrichtung zum Zentralen Erzeugen (3) einer Zuordnungsinformation, die den zu verschlüsselnden Daten und/oder dem Benutzer (4) den zumindest einen symmetrischen Verschlüsselungsparameter zuordnet, und
- eine Einrichtung (6) zum Zentralen Speichern der erzeugten Zuordnungsinformation, wobei die Zuordnungsinformation zumindest einem berechtigten Dritten zugänglich ist.

11. Informationsverarbeitungssystem nach Anspruch 10, **gekennzeichnet durch** eine dem wenigstens einen Client (1) zugeordneten Speichereinrichtung (6) zum Ablegen der Art der zu speichernden Daten, wobei
der Client (1) in Abhängigkeit der Art der zu speichernden Daten automatisch den wenigstens einen symmetrischen Verschlüsselungsparameter anfordert.

## Claims

1. Method for assigning at least one encryption parameter to at least one user (4) for the encryption of data to be stored in an information processing (IP) system having the steps:
- request by a client (1) for at least one encryption parameter;
- in response to the request, at least one encryption parameter for a symmetric encryption method is centrally determined in a device (3) of the IP system;
- transmission to the client (1) of the at least one determined symmetric encryption parameter;
- in a device of the IP system, central generation of allocation information allocating the at least one symmetric encryption parameter to the data to be stored and/or to the user (4);
- central storage of the generated allocation information in the information processing system, with the allocation information being accessible to at least one authorized third party.

2. Method according to claim 1, **characterized in that** the allocation information is generated by combining at least one identifier of the data to be stored and/or at least one identifier of the user with the at least one encryption parameter.

3. Method according to claim 1 or 2, **characterized in that** the at least one symmetric encryption parameter is encrypted by means of at least one asymmetric encryption method prior to transmission to the client (1), and **in that**
the at least one asymmetrically encrypted, symmetric encryption parameter is decrypted in the client (1) by means of a private key allocated to the user (4).

4. Method according to claim 1, 2, or 3, **characterized in that** the determination of the at least one encryption parameter is carried out in response to information stored in the IP system, in particular through at least one identifier of the data to be stored and/or at least one identifier of the user (4).

5. Method according to claim 1, 2, or 3, **characterized in that** the at least one encryption parameter is determined independently of the data to be stored and/or independently of the user (4), and subsequently the allocation information for allocating the at least one encryption parameter to the data to be stored and/or to the user is stored.

6. Method according to any one of claims 1 through 5, **characterized in that** prior to determination of the at least one encryption parameter, the access authorization of the user (4) to the IP system is checked, and if access authorization is present a certificate allocated to the user (4) is retrieved, where said certificate can contain user-specific information, in particular a public key for the user (4).

7. Method according to any one of claims 1 through 6, **characterized in that** the processing of the relevant request, the determination of the at least one encryption parameter, and/or the storage of the allocation information allocating the at least one encryption parameter to the relevant data to be stored and/or to the user (4) are each performed in a separate device in the IP system.

8. Method according to any one of claims 1 through 7, **characterized in that** the at least one encryption parameter is automatically requested by the client (1) as a function of the type of data to be stored.

9. Method according to any one of claims 1 through 7, **characterized in that** the at least one encryption parameter is requested by the user (4) at the client (1).

10. Information processing system, in particular for carrying out a method according to any one of claims 1 through 9, having:
- at least one client (1) for issuing a request for at least one symmetric encryption parameter;
- connected to the at least one client (1), a device (3) for central processing of requests for at least one symmetric encryption parameter, wherein the device (3) centrally determines the at least one symmetric encryption parameter and transmits it to the client (1) in response to a request from the client (1);
- a device for centrally generating (3) allocation information to allocate the at least one symmetric encryption parameter to the data to be encrypted and/or to the user (4); and
- a device (6) for centrally storing the generated allocation information, with said allocation information being accessible to at least one authorized third party.

11. Information processing system according to claim 10, **characterized by** a storage device (6) allocated to the at least one client (1) for the purpose of recording the type of the data to be stored, wherein the client (1) automatically requests the at least one symmetric encryption parameter as a function of the type of data to be stored.

## Revendications

1. Procédé destiné à l'attribution d'au moins un paramètre de chiffrement à au moins un utilisateur (4) pour le chiffrement de données à mémoriser dans un système de traitement d'information avec les étapes suivantes :
- demande d'au moins un paramètre de chiffrement par un client (1) ;
- en réponse à la demande, au moins un paramètre de chiffrement est déterminé de manière centrale pour un procédé de chiffrement symétrique dans un dispositif (3) du système de traitement d'information (p. 11, 1. 22-25);
- transmission au moins de ce paramètre de chiffrement symétrique déterminé vers le dient (1) ;
- une information d'affectation attribuant au moins ce paramètre de chiffrement symétrique aux données à mémoriser et/ou à l'utilisateur (4) est générée de manière centrale dans un dispositif du système de traitement d'information ;
- mémorisation de l'information d'affectation générée de manière centrale dans le système de traitement d'information, cette information d'affectation étant accessible à au moins une tierce personne autorisée.

2. Procédé selon la revendication 1, **caractérisé en ce que** l'information d'affectation est générée par la liaison d'au moins une caractéristique des données à mémoriser et/ou au moins une caractéristique de l'utilisateur avec au moins ce paramètre de chiffrement.

3. Procédé selon la revendication 1 ou 2, **caractérisé en ce qu'**au moins ce paramètre de chiffrement symétrique est codé avant la transmission au client (1) à l'aide d'un procédé de chiffrement asymétrique, et **en ce qu'**au moins ce paramètre de chiffrement symétrique codé de manière asymétrique est décodé dans le client (1) à l'aide d'une dé privée attribuée à l'utilisateur (4).

4. Procédé selon la revendication 1, 2 ou 3, **caractérisé en ce que** la détermination d'au moins ce paramètre de chiffrement est effectué en se référant aux informations classées dans le système de traitement d'information, notamment concernant au moins une caractéristique des données à mémoriser et/ou au moins une caractéristique de l'utilisateur (4).

5. Procédé selon la revendication 1, 2 ou 3, **caractérisé en ce qu'**au moins le paramètre de chiffrement est déterminé indépendamment des données à mémoriser et/ou de l'utilisateur (4) et que l'information d'affectation, permettant d'attribuer au moins ce paramètre de chiffrement aux données à mémoriser et/ou à l'utilisateur, est ensuite mémorisée.

6. Procédé selon l'une des revendications 1 à 5, **caractérisé en ce qu'**avant la détermination d'au moins ce paramètre de chiffrement, l'autorisation d'accès de l'utilisateur (4) au système de traitement d'information est vérifiée et
**en ce qu'**en cas de présentation de l'autorisation d'accès, un certificat attribué à l'utilisateur (4) et pouvant contenir des informations spécifiques à l'utilisateur, surtout une dé publique de l'utilisateur (4), est récupéré.

7. Procédé selon l'une des revendications 1 à 6, **caractérisé en ce que** le traitement de la demande respective, la détermination d'au moins ce paramètre de chiffrement et/ou la mémorisation de l'information d'affectation attribuant au moins ce paramètre de chiffrement aux données respectives à mémoriser et/ou à l'utilisateur (4), est effectué dans un dispositif séparé du système de traitement d'information.

8. Procédé selon l'une des revendications 1 à 7, **caractérisé en ce qu'**au moins ce paramètre de chiffrement est réclamé automatiquement par le client (1) en fonction du type des données à mémoriser.

9. Procédé selon l'une des revendications 1 à 7, **caractérisé en ce qu'**au moins ce paramètre de chiffrement est réclamé au client (1) par l'utilisateur (4).

10. Système de traitement d'information, surtout destiné à effectuer un procédé selon l'une des revendications 1 à 9, avec
- au moins un client (1) destiné à émettre une demande d'au moins un paramètre de chiffrement symétrique,
- un dispositif (3) relié à au moins un client (1) destiné au traitement central des demandes d'au moins un paramètre de chiffrement symétrique, le dispositif (3) déterminant de manière centrale au moins ce paramètre de chiffrement symétrique en se référant à une demande du client (1) et le transmettant au client (1),
- un dispositif destiné à la génération centrale (3) d'une information d'affectation attribuant au moins ce paramètre de chiffrement symétrique aux données à codifier et/ou à l'utilisateur (4), et
- un dispositif (6) destiné à la mémorisation centrale de l'information d'affectation générée, cette information d'affectation étant au moins accessible à une tierce personne autorisée.

11. Système de traitement d'information selon la revendication 10, **caractérisé par** un dispositif de mémorisation (6) attribué à au moins un client (1) destiné à la mémorisation du type des données à mémoriser, le client (1) réclamant automatiquement au moins ce paramètre de chiffrement symétrique en fonction du type des données à mémoriser.
